# EUROPEAN PATENT SPECIFICATION

(11) **EP 3 792 603 B1**
(45) Date of publication and mention of the grant of the patent: **07.06.2023**
(21) Application number: 20195189.4
(22) Date of filing: 09.09.2020
(51) Int. Cl.: G01G 19/08

(54) **A WEIGHING ARRANGEMENT**
WIEGEANORDNUNG
AGENCEMENT DE PESÉE

(30) Priority: 12.09.2019 SE 1951035
(43) Date of publication of application: 17.03.2021
(73) Proprietor: Daprox AB, 141 75 Kungens Kurva (SE)
(72) Inventor: ÅKERBLOM, Bengt, 141 75 Kungens Kurva (SE); HEMLÉN, Mikael, 141 75 Kungens Kurva (SE)
(74) Representative: Zacco Sweden AB

(56) References cited:
- EP-A1- 2 910 911
- WO-A1-2019/004898

## Description

### TECHNICAL FIELD

The present invention relates to a weighing arrangement according to the preamble of claim 1.

The present invention concerns the industry providing and/or producing weighing arrangements configured for the weighing of loads, such as cranes, load carrying arms, pick and carry cranes, tail lifts, chassi scale for trucks and tractors, refuse collection vehicles etc.

The present invention may concern the industry producing weighing arrangements and/or vehicles adapted for handling of e.g. refuse bins or other objects to be weighed.

### BACKGROUND

There is a desire to provide an efficient and robust weighing arrangement capable to perform accurate measurement.

There is a desire to provide a compact weighing arrangement.

There is a desire to develop current weighing devices, which exist in the technical field, to be used in rough environment.

### SUMMARY OF THE INVENTION

Prior art disclosed in WO 93/17308 reveals a weighing arrangement for mobile weighing of an article.

Weighing arrangements may be used for weighing of refuse bins, wherein the weighing arrangement uses electrical strain gauges for measuring the weight of load. In most cases, the orientation of each electrical strain gauge is significant and the electrical strain gauges are attached to the substrate with a specific type of glue.

Current weighing arrangements or load cells may use angular rate sensors mounted to the rotational axis (i.e. at a distance from the load cell). Such angular rate sensor is mounted individually and is separately coupled to the load cell. The angular rate sensor is subjected to harsh environment and high service and maintenance cost.

However, there may be a problem with buckling and breaking the electrical strain gauge, especially in rough environment and handling.

Swedish patent SE 540 977 describes a weighing device making use of an inductive distance measuring sensor apparatus, which measures reluctance by means of DC magnetic fields in regard to changes in measure of a gap of a bending (flexible) structure, wherein the measure of the gap is dependent on the applied load. A very robust weighing device is provided due to the fact that the flux paths emanating from a magnetically conductive core will be stable and unaffected in case of rough handling and harsh environment. The invention disclosed in SE 540 977 works well, but is subject to development.

An object of the present invention is to provide a compact weighing arrangement also comprising means for compensation of acceleration and/or angle alteration per time and/or angle rate of the weighing arrangement due to jerky lifting and/or other noncontinuous handling of the load to be weighed.

An object of the present invention is to provide a compact weighing arrangement configured for calculation of the actual weight of the load taking into account the actual angle that the weighing arrangement has rotated from a first position to a second position, which actual angle determines the bending moment acting on the flexible portion.

An object of the present invention is to provide a weighing arrangement having reliability and accuracy in functionality and cost-effective production and operation.

This has in different embodiments been achieved by means of a weighing arrangement configured to be mounted on a lift device, the weighing arrangement comprises a flexible portion configured to deform when a load is applied to the flexible portion; a gap sensing detector configured to detect the measure of a gap defined by an upper surface and a lower surface; the flexible portion is coupled to the upper surface and/or the lower surface for providing a measure of the gap upon applied load; an electrical control circuitry coupled to the gap sensing detector and configured to convert said measure to a registered weight of the applied load; wherein the weighing arrangement further comprises an electro-mechanical gyroscope coupled to the electrical control circuitry; the electro-mechanical gyroscope is configured to measure rotational velocity of the weighing arrangement; and the electrical control circuitry is configured to adjust the registered weight to actual weight from changes in rotational velocity.

Alternatively, the lift device comprises a rotatable lift device.

Alternatively, the electro-mechanical gyroscope is a micro electro-mechanical gyroscope.

Alternatively, during use of the weighing arrangement and when the weighing arrangement being mounted on the lift device, the electro-mechanical gyroscope is configured to measure rotational velocity of the weighing arrangement when the lift device rotates and/or lift the weighing arrangement.

Alternatively, the electrical control circuitry is configured to calculate the actual weight of the load from detected measure of the gap.

Alternatively, in a first position of the weighing arrangement, the direction of an imaginary line, intersecting the upper and lower surface, corresponds or nearly corresponds with the direction of gravity.

Alternatively, in a second position of the weighing arrangement, the direction of the imaginary line intersecting the upper and lower surface extends with an angle relative to the direction of gravity.

Alternatively, during use of the weighing arrangement when mounted on the rotatable lift device, the second position is an end position.

Alternatively, the electro-mechanical gyroscope is configured to measure rotational velocity of the weighing arrangement continuously from the first position to the second position.

Alternatively, the electrical control circuitry is configured to process signals regarding the rotational velocity for determining the actual angle that the weighing arrangement has rotated from the first position towards the second position, by taking into account the rotational velocity or angular rate of the weighing arrangement (degrees per time unit).

Alternatively, the weighing arrangement is rigidly mounted to the lift device.

Alternatively, the weighing arrangement is demountable arranged to the lift device.

Alternatively, the weighing arrangement is rotary hinged onto the lift device (e.g. a lift arm) so that the bending moment induced in the flexible portion is non-varying during continuous rotational velocity of the lift device.

Alternately, the electrical control circuitry is configured to calculate the actual weight of the load taking into account the actual angle that the weighing arrangement has rotated from the first position, which actual angle determines the bending moment acting on the flexible portion.

Alternatively, the electrical control circuitry is configured to adjust the registered weight from variation in the rotational velocity/angle rate (i.e. decelerations and accelerations of the lift device) taking into account variations of the measure of the gap.

Alternatively, the weighing arrangement further comprises an accelerometer.

Alternatively, the accelerometer is coupled to the electrical control circuitry, which accelerometer is configured to detect variations in rotational velocity.

Alternatively, the electrical control circuitry is configured to adjust the registered weight from variations in decelerations and accelerations of the lift device and/or weighing arrangement into a compensated value, wherein variations being detected (measured) by the electro-mechanical gyroscope and/or accelerometer. Alternatively, the electro-mechanical gyroscope and/or accelerometer may detect variations in rate of rotational velocity (e.g. degrees per second) without any fixed point of reference.

The electromechanical gyroscope and/or accelerometer may measure (detect) the acceleration relatively "free fall" and the compensated weight value may be expressed as a force acting on the load equal to the mass of the load times its acceleration or deceleration.

Alternatively, the weighing arrangement is defined as a weighing arrangement configured for weighing in motion (dynamic weighing) by using the gap sensing detector for measuring the force (load) that affects the flexible portion and by using the electromechanical gyroscope and/or accelerometer for measuring the acceleration/deceleration.

In such way is achieved that the electrical control circuitry may calculate the actual weight from registered weight and from changes in said rotational velocity detected by the electro-mechanical gyroscope and/or accelerometer.

In such way is achieved that the electrical control circuitry may calculate compensation values and thus registering the weight of the load carried by the weighing arrangement without stopping and without interrupting measuring the load being lifted by the lift device.

This allows compensation for external vibrations and variations in rotational velocity.

The gap sensing detector may comprise a transducer producing an electrical signal having a magnitude being directly proportional to the force of the load being measured.

Alternatively, the flexible portion joins a first end of the weighing arrangement and joins a second end of the weighing arrangement configured to carry the load.

Alternatively, the flexible portion comprises a pair of flexible steel sheets. Alternatively, the pair of flexible steel sheets together with the first and second ends form a parallelogram.

Alternatively, the flexible portion may comprise any flexible material, such as spring steel, other spring material, other flexible material, stainless steel, composite material or other types of material.

The weighing arrangement comprises a cover housing, in which the components of the weighing arrangement are mounted.

The cover housing may include the flexible portion, the gap sensing detector configured to measure the gap between the upper and lower surface, the electrical control circuitry coupled to the gap sensing detector, and the electro-mechanical gyroscope.

Alternatively, a cable arrangement is mounted through the cover housing and coupled to the electrical control circuit.

In such way there is achieved a robust weighing arrangement which is configured to be mounted to a rotatable lift device.

In such way there is achieved compact weighing unit, easy to mount and simple to couple to the computer of the platform.

Alternatively, the electrical control circuit of the weighing arrangement is configured be coupled to a central weight register data base.

Alternatively, the width of the gap is configured to vary in dependency of the magnitude of the bending moment.

Alternatively, the weighing arrangement is configured to be mounted on a rotatable lift device, such as a lift arm or lifting arm or lift or other elevating apparatus.

This has in different embodiments been achieved by means of a method of weighing a load by means of a weighing arrangement configured to be mounted on a rotatable lift device, the weighing arrangement comprises a flexible portion configured to deform, when a load affects the flexible portion, a gap sensing detector configured to detect the measure of a gap defined by an upper surface and a lower surface, the flexible portion is coupled to the upper surface and/or the lower surface for providing a measure of the gap upon applied load, an electrical control circuitry coupled to the gap sensing detector and configured to convert said measure to a registered weight of the applied load, the weighing arrangement comprises an electro-mechanical gyroscope coupled to the electrical control circuitry, the electro-mechanical gyroscope is configured to measure rotational velocity of the weighing arrangement, and the electrical control circuitry is configured to adjust the registered weight to actual weight from changes in rotational velocity.

The method comprises the steps of; mounting of the weighing arrangement on the rotatable lift device; lifting the load by means of the rotatable lift device; detecting the measure of the gap; converting the measure of the gap to a registered weight, and adjusting the registered weight to actual weight.

Alternatively, the method comprises the step of adjusting the registered weight to actual weight by means of an accelerometer configured to detect variations in rotational velocity.

Alternatively, the method comprises the step of adjusting data regarding the actual weight of the load to a central weight register data base.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims.

### BRIEF DESCRIPTION OF THE DRAWINGS

The present disclosure will now be described by way of examples with references to the accompanying schematic drawings, of which:
Fig. 1 illustrates a refuse collection vehicle using a weighing arrangement according to a first example;
Fig. 2 illustrates a crane using a weighing arrangement according to a second example;
Fig. 3 illustrates the principle of moving a lift arm comprising a weighing arrangement according to a third example;
Fig. 4 illustrates the principle of moving a lift arm and a weighing arrangement according to a fourth example;
Fig. 5 illustrates a weighing arrangement according to a fifth example;
Figs. 6a-6b illustrate a weighing arrangement according to a sixth example;
Fig. 7 illustrates a weighing arrangement according to a seventh example; and
Figs. 8 and 9 illustrate flowcharts showing exemplary methods of weighing a load.

### DETAILED DESCRIPTION

Hereinafter, exemplary embodiments of the present disclosure will be described with reference to the accompanying drawings, wherein for the sake of clarity and understanding of the disclosure some details of no importance may be deleted from the drawings.

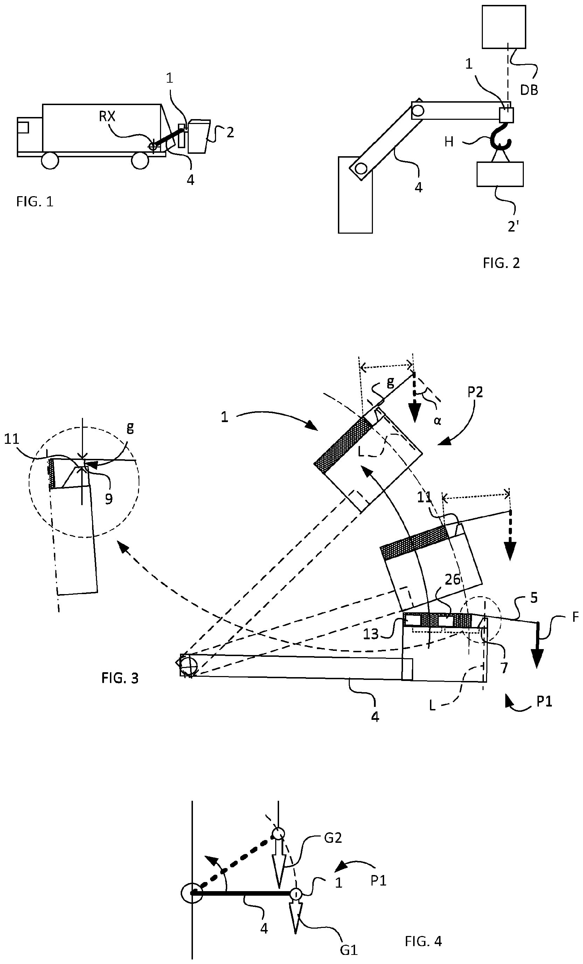

Fig. 1 illustrates a refuse collection vehicle using a weighing arrangement 1 according to a first example. A refuse bin 2 is configured to be lifted by a lift arm 4 of the refuse collection vehicle. The weighing arrangement 1 is fixedly mounted to the lift arm 4 and is positioned between the refuse bin 2 and the lift arm 4. The lift arm 4 is configured to rotate about a rotational axis RX. When an operator (not shown) mounts the refuse bin 2 to the lift arm 4, the weighing arrangement 1 is ready to weigh the refuse bin 2 and for registering data regarding the weight of the collected refuse for each individual refuse bin 2 to be fed to a central register data base (not shown). It is important the weighing arrangement 1 produces correct data being fed to the central register data base.

When the lift arm 4 swings upward, the lift arm 4 may swing intermittently with nonuniform angular rate of rotation, whereas the measured weight of the individual refuse bin 2 may change.

The weighing arrangement 1 may thus occasionally register a divergent weight, which influences the total weight registration and extrapolation thereof. For solving this problem, the electrical control circuitry is configured to adjust the registered weight to actual weight from changes in rotational velocity or angle rate.

The weighing arrangement 1 comprises a flexible portion (not shown) configured to deform when a load (refuse bin 2) is applied to the flexible portion via a load carrying holder (not shown). A gap sensing detector (not shown) of the weighing arrangement 1 is configured to detect the measure of a gap defined by an upper surface and a lower surface (not shown). The flexible portion is coupled to the upper surface and/or the lower surface for providing a measure of the gap upon applied load.

An electrical control circuitry (not shown) is coupled to the gap sensing detector and configured to convert the measure to a registered weight of the applied load. The weighing arrangement 1 further comprises an electro-mechanical gyroscope (not shown) coupled to the electrical control circuitry. The electro-mechanical gyroscope is configured to measure rotational velocity of the weighing arrangement and the electrical control circuitry is configured to adjust the registered weight to actual weight from changes in rotational velocity.

Fig. 2 illustrates a crane using a weighing arrangement 1 according to a second example. A load 2' is configured to be lifted by a lift arm 4 of the crane. The weighing arrangement 1 is fixedly mounted to the lift arm 4 and is positioned between the hook H carrying the load 2' and the lift arm 4. The weighing arrangement 1 is configured to weigh the load 2' and feeding registered and adjusted actual data regarding the weight of the load 2' to a central register data base DB, which adjusted actual data is adjusted by means of an electro-mechanical gyroscope (not shown) of the weighing arrangement 1. The electro-mechanical gyroscope detects the changes is angle rate of the lift arm 4.

Fig. 3 illustrates the principle of rotating a rotatable lift arm 4 and a weighing arrangement 1 according to a third example. The weighing arrangement 1 is configured to be removable mounted on the rotatable lift arm 4. The weighing arrangement 1 comprises a flexible portion 5 configured to deform when a load F is applied to the flexible portion 5.

The load F may be defined as the weight of a subject to be weighed.

A gap sensing detector 7 is arranged to the weighing arrangement 1 and is configured to detect the measure of a gap g (distance) defined between an upper surface 9 and a lower surface 11 of the weighing arrangement 1. The distance (gap g) formed between upper surface 9 and a lower surface 11 is adapted to indicate the load affecting the flexible portion 5. The flexible portion 5 is coupled to the upper surface 9 and/or the lower surface 11 for providing different measures of the gap g dependent on different applied loads F.

If a high load is applied, there will be a smaller gap g and if a light load is applied there will be a wider gap g.

The weighing arrangement 1 comprises an electrical control circuitry CPU (e.g. central processor unit) 26 coupled to the gap sensing detector 7 and configured to convert the measure of the gap g and/or gap measure to a registered weight of the applied load as a first data.

The gap sensing detector 7 may be an inductive gap sensing distance measuring sensor or a laser measuring sensor or other gap sensor.

As long as the angular rate of the rotatable lift arm 4 is constant, the load F will be constant and corresponds with measured weight, but as soon as the rotatable lift arm 4 accelerates (e.g. due to jerky motion or uneven operator control or by other parameters) or decelerates, the measured weight and/or the first data must be adjusted in regard to the actual deceleration and/or acceleration of the rotatable lift arm 4 for determining the actual weight into a second data.

The weighing arrangement 1, for detecting said deceleration and acceleration, comprises an electro-mechanical gyroscope 13 coupled to the electrical control circuitry CPU 26.

The electro-mechanical gyroscope 13 is configured to measure rotational velocity (angular rate) of the weighing arrangement 1, when the rotatable lift arm 4 rotates.

The electrical control circuitry CPU 26 is configured to adjust the registered weight to actual weight from changes in rotational velocity (angular rate) and calculate the actual weight of the load from detected alteration in measure of the gap.

A certain acceleration and/or deceleration indicated by the electro-mechanical gyroscope 13 will be taken into account by the electrical control circuitry CPU which from predetermined and/or empirical data will use a beforehand programed algorithm processed by the electrical control circuitry CPU 26 for achieving the actual weight of the load.

The electro-mechanical gyroscope 13 is configured to measure angular rate of the weighing arrangement 1, when the lift arm 4 rotates. The electrical control circuitry CPU 26 is configured to adjust the registered weight from variation in the angle rate, i.e. decelerations and accelerations of the rotatable lift arm 4, i.e. taking into account variations of the measure of the gap g due to decelerations and/or accelerations of the rotatable lift arm 4.

The electrical control circuitry CPU 26 may also be configured to process signals regarding the angle rate for determining the actual angle that the weighing arrangement has rotated from a first position P1 by taking into account actual degrees per time unit the weighing arrangement 1 has rotated.

Alternatively, in the first position P1 of the weighing arrangement 1, the direction of an imaginary line L intersecting the upper 9 and the lower surface 11 corresponds or nearly corresponds with the direction of gravity force. In a second position P2 of the weighing arrangement 1, the direction of the imaginary L line intersecting the upper 9 and lower surface 11 may extend with an angle α relative to the direction of gravity.

Alternatively, the second position P2 is an end position. The electro-mechanical gyroscope 13 may be configured to measure angle rate (rotational velocity) of the weighing arrangement 1 continuously from the first position P1 to the second position P2.

The electrical control circuitry CPU 26 may be configured to estimate the absolute end position of the the second position P2 by means of the electro-mechanical gyroscope 13 detecting the angle rate of the weighing arrangement 1,

Fig. 4 illustrates the principle of moving a lift arm 4 and a weighing arrangement 1 according to a fourth example. The angle rate is intermittently increasing during the lifting sequence whereas the load force G2 is higher than the load force G1. The angle rate is detected by a micro electro-mechanical gyroscope (not shown).

The weighing arrangement 1 is configured to adjust for the acceleration and/or deceleration of the lift arm inducing a higher measured registered weight due to a higher force affecting the load being lifted and weighed. The electrical control circuitry CPU (not shown) is configured to compensate and adjust the registered weight from detected angle rate to an actual weight value.

Alternatively, the electrical control circuitry (not shown) may be configured to adjust the registered weight of the load, also by taking into account the actual angle that the weighing arrangement has rotated from the first position P1, which angle determines the bending moment acting on the flexible portion in turn affecting the actual change in gap measure (not shown).

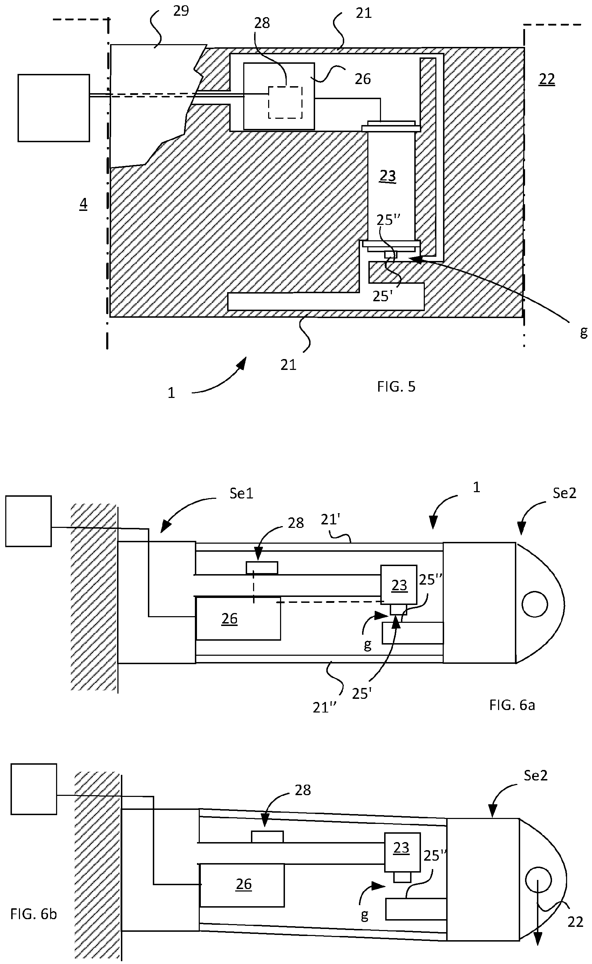

Fig. 5 illustrates a weighing arrangement 1 according to a fifth example. The weighing arrangement 1 is thus configured to be mounted on a rotatable lift device, such as a lift arm 4 or lifting arm or lift or other elevating apparatus.

The weighing arrangement 1 comprises a flexible portion 21 configured to deform when a load 22 affects the flexible portion 21. A gap sensing detector 23 of the weighing arrangement 1 is configured to detect the measure of a gap g defined by an upper surface 25' and a lower surface 25".

The flexible portion 21 is coupled and/or joined to and/or connected to the upper surface 25' and/or the lower surface 25" for providing a measure of the gap g depending upon applied load 22. An electrical control circuitry 26 is coupled to the gap sensing detector 23 and configured to convert the gap measure to a registered weight of the applied load 22.

The weighing arrangement 1 further comprises an electro-mechanical gyroscope 28 coupled to the electrical control circuitry 26. The electro-mechanical gyroscope 28 is configured to measure rotational velocity of the weighing arrangement 1. The electrical control circuitry 26 is configured to adjust the registered weight of the load to actual weight of the load from changes in rotational velocity (angle rate) of the weighing arrangement 1.

A cover housing 29 encloses the components of the weighing arrangement 1. The cover housing 29 thus may encompass the flexible portion 21, the gap sensing detector 23 configured to measure the gap g between the upper 25' and lower 25" surface, the electrical control circuitry 26 coupled to the gap sensing detector 23, and the electro-mechanical gyroscope 28.

Figs. 6a-6b illustrate a weighing arrangement 1 according to a sixth example. A first portion Se1 of the weighing arrangement 1 is configured to be coupled or attached rigidly to the lifting arm (not shown). An upper flexible metal sheet 21' joins the first portion Se1 and a second portion Se2. A lower flexible metal sheet 21" joins the first portion Se1 and the second portion Se2.

A gap sensing detector 23 of the weighing arrangement 1 is configured to detect the measure of a gap g defined by an upper surface 25' and a lower surface 25".

The flexible portion 21 is coupled to the upper surface 25' and/or the lower surface 25" for providing a measure of the gap g in dependency of applied load 22 (see Fig. 6b). An electrical control circuitry 26 is coupled to the gap sensing detector 23 and configured to convert the gap measure to a registered weight of the applied load 22 (see Fig. 6b).

The weighing arrangement 1 further comprises an electro-mechanical gyroscope 28 coupled to the electrical control circuitry 26. The electro-mechanical gyroscope 28 is configured to measure rotational velocity of the weighing arrangement 1. The electrical control circuitry 26 is configured to adjust the registered weight of the load 22 to actual weight of the load from changes in rotational velocity (angle rate).

Fig. 6a shows the weighing arrangement 1 in an unloaded state. In Fig. 6b is shown that the load 22 is applied. The respective upper and lower flexible metal sheet 21', 21" flex downward and form a parallelogram comprising the lower surface 25", which travels downward providing a wider gap g. The gap sensing detector 23 detects a wider gap and feed a signal to the electrical control circuitry 26 concerning the measured gap g. The electrical control circuitry 26 coupled to the gap sensing detector 23 converts the gap measure to a registered weight value of the applied load.

The electrical control circuitry 26 may be programed with data and/or algorithms in a data program, which is run on a computer for executing the calculation and conversion of gap measure into actual weight value.

The electro-mechanical gyroscope 28 measures the rotational velocity (angle rate) of the weighing arrangement 1 travelling with the lifting arm (not shown). The electrical control circuitry 26 is configured to adjust the weight value or registered weight of the load into an actual weight value from changes in rotational velocity (angle rate), that is, when acceleration or deceleration of the lifting arm occurs.

The electrical control circuitry 26 may be programed with data and/or algorithms in a data program, which is run on a computer for executing the adjustment of the registered weight value into an adjusted weight value of the load taking into account the detected angle rate of the weighing arrangement 1.

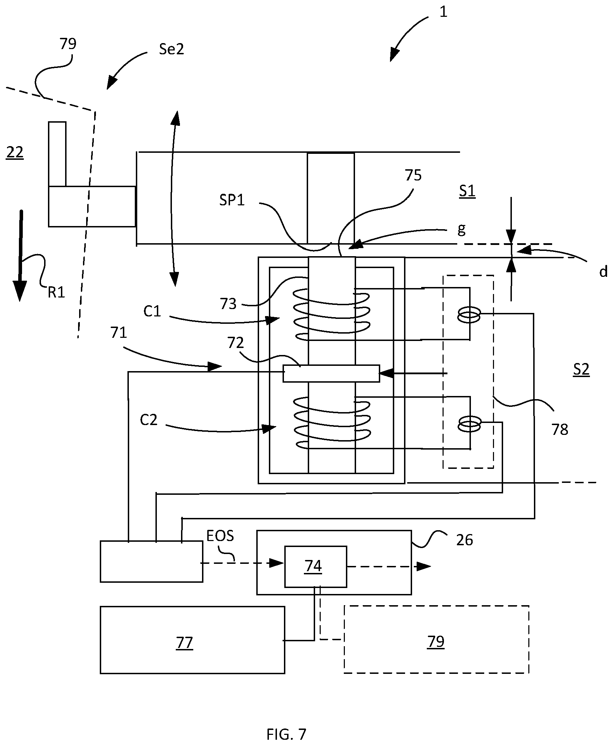

Fig. 7 illustrates a weighing arrangement 1 according to a seventh example. The weighing arrangement 1 is configured to be mounted on a fundament (not shown) and comprises a first flexible section S1. The first flexible section S1 is configured to deform when a load 22 is applied to the first flexible section S1.

An inductive distance measuring sensor 71 is mounted to a second section S2 of the weighing arrangement 1 and comprises a magnetically conductive core 73 having a first end surface 75. The first end surface 75 of the magnetically conductive core 73 faces a first section plane SP1 of the first flexible section S1. The first flexible section S1 may have a magnetic section within the area of the first section plane SP1.

The fundament may be configured to be mounted on a platform (such as a refuse collection vehicle or other vehicle or crane or other lifting device or other lifting apparatus).

The weighing arrangement 1 comprises a second portion Se2 configured to be coupled to an object 79 (such as a refuse bin) to be weighed. The object 79 is affected by gravity in a first direction R1 during use of the weighing arrangement.

The first flexible and second sections S1, S2 may be formed as elongated bars.

The inductive distance measuring sensor 71 comprises a magnetic field measuring unit 72 configured to regulate an electrical current to a first coil C1 of the magnetically conductive core 73 for maintaining the magnetic field to zero and configured to generate an electrical output signal EOS being representative of the distance d of a gap g to be measured. A converting unit 74 of an electrical control circuitry CPU 26 is coupled to the inductive distance measuring sensor 71 for converting said distance d to a registered weight of the applied load 22 and determine the actual weight.

The converting unit 74 is coupled to an electro-mechanical gyroscope 77. The electro-mechanical gyroscope 77 is rigidly fixed to the weighing arrangement 1 and is configured to measure rotational velocity of the weighing arrangement1.

The magnetic field measuring unit 71 further comprises a magneto resistive sensor 78. The first coil C1 is positioned between the first section plane SP1 and a second coil C2. The inductive distance measuring sensor 71 is configured to function according to the reluctance principle. The second coil C2 of the magnetically conductive core 73 is coupled to the magnetic field measuring unit 72 for feeding a reference current to the second coil C2.

The weighing arrangement 1 further may comprise an accelerometer 79 coupled to the converting unit 74 of the electrical control circuitry CPU 26.

The electrical control circuitry CPU 26 is configured to calculate the actual weight of the load taking into account the detected variations in rotational velocity of the weighing arrangement 1.

The electrical control circuitry CPU 26 is configured to adjust the registered weight from detected variations in decelerations and accelerations of the weighing arrangement 1 into an adjusted weight value, wherein said variations being detected (measured) by the electro-mechanical gyroscope 77 and/or accelerometer 79.

The electro-mechanical gyroscope 77 and/or accelerometer 79 being configured to detect variations in rate of rotational velocity (e.g. degrees per second) without any fixed point of reference.

The electrical control circuitry CPU 26 is thus configured to adjust the registered weight to actual weight from changes in rotational velocity, thus for compensating for accelerations and/or decelerations affecting the weight of the load.

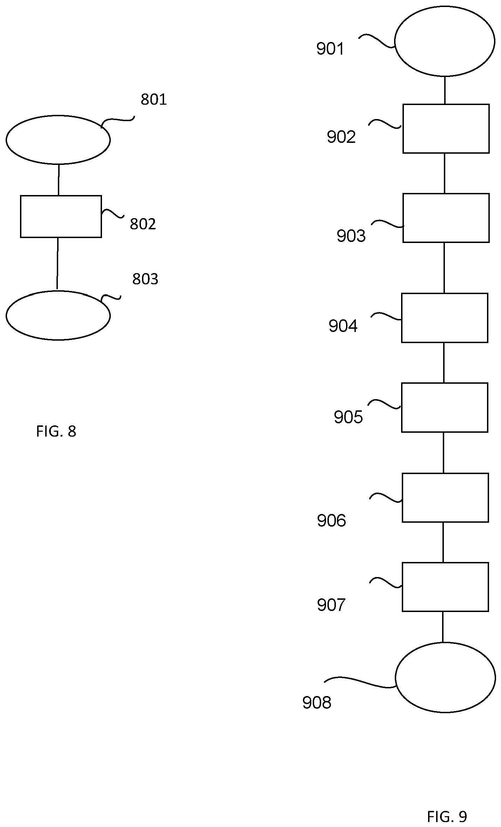

Figs. 8 and 9 illustrate flowcharts showing exemplary methods of weighing a load by means of a weighing arrangement configured to be mounted on a rotatable lift device. The weighing arrangement comprises a flexible portion configured to deform, when a load affects the flexible portion, a gap sensing detector configured to detect the measure of a gap defined by an upper surface and a lower surface, the flexible portion is coupled to the upper surface and/or the lower surface for providing a measure of the gap upon applied load, an electrical control circuitry coupled to the gap sensing detector and configured to convert said measure to a registered weight of the applied load, the weighing arrangement comprises an electro-mechanical gyroscope coupled to the electrical control circuitry, the electro-mechanical gyroscope is configured to measure rotational velocity of the weighing arrangement, and the electrical control circuitry is configured to adjust the registered weight to actual weight from changes in rotational velocity.

As shown in Fig. 8, in step 801 the method is started. In step 802 the method is performed. In step 803 the method is stopped.

Step 802 may comprises the steps of; mounting of the weighing arrangement on the rotatable lift device; lifting the load by means of the rotatable lift device; detecting the measure of the gap; converting the measure of the gap to a registered weight, and adjusting the registered weight to actual weight.

Step 901 comprises, as shown in Fig. 9, starting the method. Step 902 comprises mounting of the weighing arrangement on the rotatable lift device. Step 903 comprises lifting the load by means of the rotatable lift device. Step 903 comprises detecting the measure of the gap. Step 904 comprises converting the measure of the gap to a registered weight. Step 905 comprises adjusting the registered weight to actual weight. Step 906 comprises adjusting the registered weight to actual weight by means of an accelerometer configured to detect variations in rotational velocity. Step 907 comprises feeding data regarding the actual weight of the load to a central weight register data base. In step 908 the method is stopped.

The disclosure is of course not in any way restricted to the preferred embodiments described above, but many possibilities to modifications, or combinations of the described embodiments, thereof should be apparent to a person with ordinary skill in the art without departing from the basic idea of the invention as defined in the appended claims.

## Claims

1. A weighing arrangement (1) configured to be mounted on a lift device (4), the weighing arrangement (1) comprises;
- a flexible portion (21, 21', 21", S1) configured to deform when a load (22) is applied to the flexible portion;
- a gap sensing detector (23) configured to detect the measure of a gap (g) formed between an upper surface (9, 25') and a lower surface (11, 25");
- the flexible portion (21, 21', 21", S1) is joined to the upper surface (9, 25') and/or the lower surface (11, 25") for providing a measure of the gap (g) upon applied load (22);
- an electrical control circuitry (26) coupled to the gap sensing detector (23) and configured to convert said measure to a registered weight of the applied load (22); **characterized in that**
- the weighing arrangement (1) further comprises an electro-mechanical gyroscope (13, 28, 77) coupled to the electrical control circuitry (26);
- the electro-mechanical gyroscope (13, 28, 77) is configured to measure rotational velocity of the weighing arrangement (1); and
- the electrical control circuitry (26) is configured to adjust the registered weight to actual weight from changes in rotational velocity, wherein the electrical control circuitry (26) calculates the actual weight from the registered weight and from said changes in rotational velocity detected by the electromechanical gyroscope (13, 28, 77).

2. The weighing arrangement (1) according to claim 1, **wherein** the weighing arrangement (1) further comprises an accelerometer (79).

3. The weighing arrangement (1) according to claim 1 or 2, **wherein** the flexible portion (21, 21', 21") joins a first end (Se1) of the weighing arrangement (1) and joins a second end (Se2) of the weighing arrangement (1), which second end (Se2) is configured to carry the load (22).

4. The weighing arrangement (1) according to any of claims 1 to 3, **wherein** the flexible portion (21, 21', 21") comprises a pair of flexible steel sheets (21', 21").

5. The weighing arrangement (1) according to claim 3 and 4, **wherein** the pair of flexible steel sheets (21', 21") together with the first and second ends (Se1, Se2) form a parallelogram when the load (22) is applied.

## Patentansprüche

1. Wägeanordnung (1), die zur Montage an einer Aufzugsvorrichtung (4) konfiguriert ist, wobei die Wägeanordnung (1) umfasst;
- einen flexiblen Abschnitt (21, 21', 21", S1), der so konfiguriert ist, dass er sich verformt, wenn eine Last (22) auf den flexiblen Abschnitt ausgeübt wird;
- einen Spalterfassungsdetektor (23), der so konfiguriert ist, dass er das Maß eines zwischen einer oberen Fläche (9, 25') und einer unteren Fläche (11, 25") gebildeten Spalts (g) erfasst;
- wobei der flexible Abschnitt (21, 21', 21", S1) an der oberen Fläche (9, 25') und/oder der unteren Fläche (11, 25") angeschlossen ist, um ein Maß für den Spalt (g) bei aufgebrachter Last (22) zu liefern;
- eine elektrische Steuerschaltung (26), die mit dem Spalterfassungsdetektor (23) gekoppelt und so konfiguriert ist, dass sie die Messung in ein registriertes Gewicht der aufgebrachten Last (22) umwandelt; **dadurch gekennzeichnet, dass**
- die Wägeanordnung (1) ferner ein elektromechanisches Gyroskop (13, 28, 77) umfasst, das mit der elektrischen Steuerschaltung (26) gekoppelt ist;
- das elektromechanische Gyroskop (13, 28, 77) so konfiguriert ist, dass es die Drehgeschwindigkeit der Wägeanordnung (1) misst; und
- die elektrische Steuerschaltung (26) so konfiguriert ist, dass sie das registrierte Gewicht an das tatsächliche Gewicht aus Änderungen der Drehgeschwindigkeit anpasst, wobei die elektrische Steuerschaltung (26) das tatsächliche Gewicht aus dem registrierten Gewicht und aus den vom elektromechanischen Gyroskop (13, 28, 77) erfassten Änderungen der Drehgeschwindigkeit berechnet.

2. Wägeanordnung (1) nach Anspruch 1, wobei die Wägeanordnung (1) ferner einen Beschleunigungsmesser (79) umfasst.

3. Wägeanordnung (1) nach Anspruch 1 oder 2, wobei der flexible Abschnitt (21, 21', 21") an ein erstes Ende (Se1) der Wägeanordnung (1) anschließt und an ein zweites Ende (Se2) der Wägeanordnung (1) anschließt, wobei das zweite Ende (Se2) zum Tragen der Last (22) konfiguriert ist.

4. Wägeanordnung (1) nach einem der Ansprüche 1 bis 3, wobei der flexible Abschnitt (21, 21', 21") ein Paar flexible Stahlbleche (21', 21") umfasst.

5. Wägeanordnung (1) nach Anspruch 3 und 4, wobei das Paar flexibler Stahlbleche (21', 21") zusammen mit dem ersten und zweiten Ende (Se1, Se2) ein Parallelogramm bildet, wenn die Last (22) aufgebracht wird.

## Revendications

1. Agencement de pesée (1) configuré pour être monté sur un dispositif de levage (4), l'agencement de pesée (1) comprenant ;
- une partie flexible (21, 21', 21", S1) configurée pour se déformer lorsqu'une charge (22) est appliquée sur la partie flexible ;
- un détecteur de détection d'écart (23) configuré pour détecter la mesure d'un écart (g) formé entre une surface supérieure (9, 25') et une surface inférieure (11, 25") ;
- la partie flexible (21, 21', 21", S1) est jointe à la surface supérieure (9, 25') et / ou à la surface inférieure (11, 25") pour fournir une mesure de l'écart (g) à la charge appliquée (22) ;
- un circuit de commande électrique (26) couplé au détecteur de détection d'écart (23) et configuré pour convertir ladite mesure en un poids enregistré de la charge appliquée (22) ; **caractérisé en ce que**
- l'agencement de pesée (1) comprend en outre un gyroscope électromécanique (13, 28, 77) couplé au circuit de commande électrique (26) ;
- le gyroscope électromécanique (13, 28, 77) est configuré pour mesurer la vitesse de rotation de l'agencement de pesage (1) ; et
- le circuit de commande électrique (26) est configuré pour ajuster le poids enregistré au poids réel à partir de changements de vitesse de rotation, le circuit de commande électrique (26) calculant le poids réel à partir du poids enregistré et à partir desdits changements de vitesse de rotation détectés par le gyroscope électromécanique (13, 28, 77).

2. Agencement de pesée (1) selon la revendication 1, dans lequel l'agencement de pesée (1) comprend en outre un accéléromètre (79).

3. Agencement de pesée (1) selon la revendication 1 ou 2, dans lequel la partie flexible (21, 21', 21") rejoint une première extrémité (Se1) de l'agencement de pesée (1) et rejoint une seconde extrémité (Se2) de l'agencement de pesée (1), ladite seconde extrémité (Se2) étant configurée pour porter la charge (22).

4. Agencement de pesée (1) selon l'une quelconque des revendications 1 à 3, dans lequel la partie flexible (21, 21', 21") comprend une paire de tôles d'acier flexibles (21', 21").

5. Agencement de pesée (1) selon la revendication 3 et 4, dans lequel la paire de tôles d'acier flexibles (21', 21") conjointement avec les première et seconde extrémités (Se1, Se2) forment un parallélogramme lorsque la charge (22) est appliquée.
